# FASCICULE DE BREVET EUROPEEN

(11) **EP 3 093 555 B1**
(45) Date de publication et mention de la délivrance du brevet: **19.09.2018**
(21) Numéro de dépôt: 16169046.6
(22) Date de dépôt: 10.05.2016
(51) Int. Cl.: H05B 33/08, B60L 1/14, F21S 41/663, B60Q 1/14

(54) **LIMITEUR DE PICS DE COURANTS TRANSITOIRES LORS DE VARIATIONS DE CHARGES LED**
BEGRENZER VON VORÜBERGEHENDEN STROMSPITZEN BEI VERÄNDERUNGEN DER LED-LADUNGEN
LIMITER OF TRANSIENT CURRENT SURGES DURING LED LOAD FLUCTUATIONS

(30) Priorité: 13.05.2015 FR 1554311
(43) Date de publication de la demande: 16.11.2016
(73) Titulaire: VALEO VISION, 93012 Bobigny Cedex (FR)
(72) Inventeur: WACHEUX, Patrick, 27220 BOIS LE ROY (FR); DIALLO, Massourang, 78955 CARRIERES SOUS POISSY (FR)

(56) Documents cités:
- US-A1- 2010 109 557
- US-A1- 2011 260 617

## Description

L'invention a trait au domaine des dispositifs lumineux pour véhicules automobiles, et plus précisément aux moyens de pilotage de l'alimentation électrique de sources lumineuses au sein de tels dispositifs.

Dans le domaine des dispositifs lumineux pour véhicules automobiles, et notamment des dispositifs de signalisation lumineuse, il devient de plus en plus courant de faire recours à des sources lumineuses à composants semiconducteurs, tels que par exemple des diodes électroluminescentes, LED. Par rapport à des sources lumineuses à incandescence ou à décharge, l'utilisation de LEDs permet de créer des signatures optiques originales en plaçant par exemple une pluralité de LEDs le long d'un contour prédéfini. Par ailleurs la consommation d'énergie de LEDs est de manière générale inférieure à celle de sources lumineuses traditionnelles. Un élément LED émet un rayonnement lumineux d'une intensité prédéfinie lorsqu'il est parcouru par un courant électrique d'une intensité prédéfinie et supérieure à une valeur seuil.

De manière connue, un montage en série de plusieurs LED est monté en charge d'un dispositif de pilotage de l'alimentation électrique des LEDs. Un tel dispositif converti un courant électrique d'une première intensité, fourni de manière générale par une source de courant interne du véhicule automobile, telle qu'une batterie, en un courant électrique d'une deuxième intensité différente. La tension appliquée aux bornes du montage en série doit être telle que toutes les LEDs du montage puissent émettre un rayonnement lumineux.

Pour une fonction lumineuse donnée, il est connu de fournir deux modes d'éclairage d'intensités lumineuses différentes. Un exemple est l'éclairage frontal en modes feux de route, HB (« High Beam »), et feux de croisement, LB (« Low Beam »), respectivement. Il est connu d'implémenter ce genre de fonctionnalité par un montage de deux groupes de LEDs en série, l'intégralité des LEDs étant alimenté par les mêmes moyens de pilotage de l'alimentation électrique. Un interrupteur permet de court-circuiter un des deux groupes de LEDs dans le montage. Lorsque le court-circuit est activé, l'intensité lumineuse émise par l'ensemble des LEDs est réduite puisqu'un des deux groupes de LEDs n'émet pas de rayonnement lumineux. Ce mode correspond par exemple au mode feux de croisement. La charge du convertisseur est également instantanément réduite lorsque le court-circuit est activé. Ce changement abrupt de la charge donne lieu à des pics de courants transitoires importants traversant les LEDs qui restent alimentées. Il a été observé que ces pics peuvent présenter des intensités au-delà de 4 A et peuvent avoir lieu pendant environ 20 µs. Cependant, la plupart des éléments LEDs disponibles ne supportent que des pics de courant allant jusqu'à environ 2,5 A. Dans de telles implémentations connues, il existe donc un réel risque d'endommagement des sources lumineuses.

Il a été proposé d'absorber les pics transitoires dans de tels montages par absorption de l'énergie dans une résistance qui est sélectivement branchée dans le circuit de charge par un transistor lorsqu'un pic est détecté. De tels systèmes doivent cependant être redimensionnés pour chaque montage en charge et représentent une perte globale d'énergie puisqu'une partie de l'énergie produite est perdue dans la résistance.

L'invention a pour objectif de pallier à au moins un des problèmes posés par l'art antérieur. Plus précisément, l'invention propose un dispositif et un procédé qui permet la prévention de l'apparition de pics de courant transitoires importants dans des montages tels qu'ils viennent d'être décrits, plutôt que de réduire l'impact de tels pics une fois qu'ils sont apparus.

L'invention a pour objet un dispositif de pilotage de l'alimentation électrique d'une pluralité de sources lumineuses composée d'un premier groupe comprenant au moins une source lumineuse, monté en série avec au moins un deuxième groupe comprenant au moins une source lumineuse. Le dispositif comprend un circuit d'alimentation auquel la pluralité de sources lumineuses est branchée en charge. Le dispositif comprend également des moyens d'interruption qui permettent d'alimenter de manière sélective au moins un des premier ou deuxième groupes ou toute la pluralité de sources lumineuses. Le dispositif est remarquable en ce qu'il comprend des moyens de commande qui permettent de commander l'état d'activation du circuit d'alimentation et l'état des moyens d'interruption lorsqu'une commutation de l'alimentation de toute la pluralité de sources lumineuses à l'alimentation de l'un ou de certains seulement des groupes de sources lumineuses est requise.

De préférence, le dispositif de pilotage de l'alimentation est un dispositif de pilotage de l'alimentation pour un système lumineux d'un véhicule automobile.

Le circuit d'alimentation peut de préférence comprendre un convertisseur DC/DC, un convertisseur de type boost/buck, ou par exemple un convertisseur de type buck, réducteur de tension.

De préférence, la pluralité de sources lumineuses peut être composée d'un premier groupe comprenant au moins une source lumineuse, monté en série avec un deuxième groupe comprenant au moins une source lumineuse.

Les moyens de commande peuvent de préférence être configurés de façon à réaliser les étapes suivantes lorsqu'une commutation de l'alimentation de toute la pluralité de sources lumineuses à l'alimentation du deuxième groupe de sources lumineuses est requise :
- réception d'un signal indiquant la commutation requise, puis
- désactivation du circuit d'alimentation, puis
- commutation des moyens d'interruption, pendant que le circuit d'alimentation est désactivé, de façon à court-circuiter le premier groupe de sources lumineuses ;
- réactivation du circuit d'alimentation.

De manière préférée, le circuit d'alimentation est désactivé pendant 100 à 200 microsecondes sur réception du signal. La commutation des moyens d'interruption peut avantageusement être réalisée avec un délai par rapport à la réception du signal indiquant la commutation requise. D'autres durées de désactivation sont envisageables en fonction des composants électroniques utilisés dans le dispositif.

Le délai peut de préférence être de l'ordre de 50 à 100 microsecondes. D'autres durées de délai sont envisageables en fonction des caractéristiques techniques et propriétés des composants électroniques utilisés dans le dispositif.

De préférence, les moyens de commande peuvent comprendre un circuit électronique qui réalise la fonction de délai de commutation.

Les moyens de commande peuvent de préférence comprendre un circuit électronique qui réalise la fonction de désactivation du circuit de pilotage.

De manière préférée, les moyens de commande peuvent comprendre un élément microcontrôleur configuré de manière à réaliser la fonction de délai de commutation et/ou de désactivation du circuit de pilotage.

Les moyens de commande peuvent de manière préférée comprendre en outre des moyens de combinaison logiques de signaux émis par l'élément microcontrôleur. Il peut par exemple s'agir de portes logiques OU (OR) ou NON-OU (NOR).

Le premier et/ou le deuxième groupe peut de préférence comprendre une pluralité de sources lumineuses branchées en série.

De préférence, les sources lumineuses peuvent comprendre un composant semiconducteur, notamment une diode électroluminescente, LED, une diode électroluminescente de puissance ou une diode électroluminescente organique. Elles peuvent également comprendre une diode laser.

L'invention a également pour objet un dispositif lumineux pour un véhicule automobile. Le dispositif comprend des moyens de pilotage de l'alimentation électrique d'une pluralité de sources lumineuses composée d'un premier groupe comprenant au moins une source lumineuse, monté en série avec un deuxième groupe comprenant au moins une source lumineuse. Le dispositif lumineux est remarquable en ce que les moyens de pilotage sont conformes au dispositif selon l'invention. De préférence, le dispositif lumineux peut être un dispositif de signalisation d'un véhicule automobile.

Le premier groupe à lui seul peut de préférence implémenter la fonction lumineuse « feux de croisement », et les premier et deuxième groupes ensemble peuvent avantageusement implémenter la fonction lumineuse « feux de route » d'un véhicule automobile.

L'invention a également pour objet un procédé de pilotage de l'alimentation électrique d'une pluralité de sources lumineuses composée d'un premier groupe comprenant au moins une source lumineuse, monté en série avec un deuxième groupe comprenant au moins une source. Le procédé comprend les étapes suivantes :
- mise à disposition d'un circuit d'alimentation auquel la pluralité de sources lumineuses est branchée en charge ;
- mise à disposition de moyens d'interruption qui permettent d'alimenter de manière sélective le deuxième groupe ou la pluralité de sources lumineuses.

Le procédé est remarquable en ce qu'il comprend en outre l'étape suivante :
- commander l'état d'activation du circuit d'alimentation et l'état des moyens d'interruption lorsqu'une commutation de l'alimentation de toute la pluralité de sources lumineuses à l'alimentation du deuxième groupe de sources lumineuses est requise.

De préférence, le procédé peut comprendre les étapes suivantes :
- réception d'un signal indiquant la commutation requise, puis
- désactivation du circuit d'alimentation, puis
- commutation des moyens d'interruption, pendant que le circuit d'alimentation est désactivé, de façon à court-circuiter le premier groupe de sources lumineuses ;
- réactivation du circuit d'alimentation.

Les mesures de l'invention permettent de réduire de manière efficace les pics de courants transitoires qui peuvent apparaître dans des dispositifs connus, lorsqu'une partie des sources lumineuses branchées en série d'un dispositif d'alimentation est temporairement court-circuité. Au lieu de dissiper un surplus d'énergie temporel dans une résistance engendrant des pertes, l'invention utilise une commande intelligente des signaux de contrôle afin d'éviter l'apparition des pics de courant. Ceci présente l'avantage de ne pas perdre le surplus d'énergie et de ne pas devoir avoir recours à des résistances de dissipation, qui utilisent un espace conséquent sur circuit imprimé. De plus, selon des modes de réalisations préférés, la solution selon l'invention peut être mise à échelle sans devoir redimensionner les composants électroniques impliqués. Les modes de réalisation présentés permettent une implémentation des mesures selon l'invention soit par circuits électroniques, soit par programmation d'un élément microcontrôleur, soit par une solution hybride impliquant des circuits électroniques et un élément programmable. Cette flexibilité rend l'invention applicable à de nombreux dispositifs lumineux existants, dont la longévité et la durabilité sont ainsi augmentées.

D'autres caractéristiques et avantages de la présente invention seront mieux compris à l'aide de la description exemplaire et des dessins parmi lesquels :
- la figure 1 est une illustration schématique d'un dispositif selon un mode de réalisation préféré de l'invention ;
- la figure 2 est un chronogramme de signaux de commande impliqués dans le fonctionnement d'un dispositif selon un mode de réalisation préféré de l'invention ;
- la figure 3 montre un exemple d'implémentation d'un détail d'un dispositif selon un mode de réalisation préféré de l'invention ;
- la figure 4 est une illustration schématique d'un dispositif selon un mode de réalisation préféré de l'invention ;
- la figure 5 est un chronogramme de signaux de commande impliqués dans le fonctionnement d'un dispositif selon un mode de réalisation préféré de l'invention ;
- la figure 6 est un chronogramme de signaux de commande impliqués dans le fonctionnement d'un dispositif selon un mode de réalisation préféré de l'invention ;
- la figure 7 montre un exemple d'implémentation d'un détail d'un dispositif selon un mode de réalisation préféré de l'invention ;
- la figure 8 est une illustration schématique d'un dispositif selon un mode de réalisation préféré de l'invention ;
- la figure 9 est un chronogramme de signaux de commande impliqués dans le fonctionnement d'un dispositif selon un mode de réalisation préféré de l'invention ;
- la figure 10 montre un exemple d'implémentation d'un détail d'un dispositif selon un mode de réalisation préféré de l'invention.

Dans la description qui suit, des numéros de référence similaires seront utilisés pour décrire des concepts similaires à travers des modes de réalisation différents de l'invention. Ainsi, les numéros 100, 200 et 300 décrivent un dispositif dans trois modes de réalisation différents conformes à l'invention.

Sauf indication spécifique du contraire, des caractéristiques techniques décrites en détail pour un mode de réalisation donné peuvent être combinées aux caractéristiques techniques décrites dans le contexte d'autres modes de réalisation décrits à titre exemplaire et non limitatif.

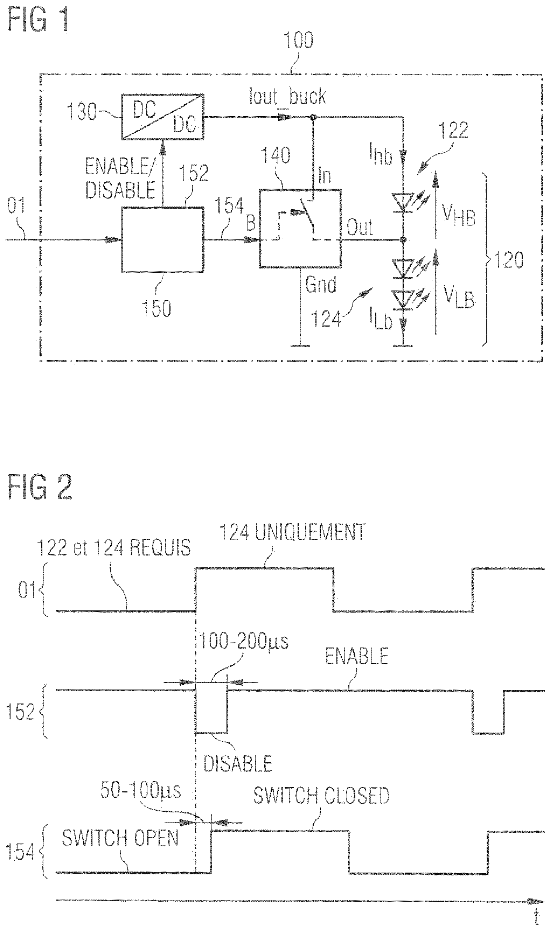

La figure 1 montre de manière schématique un dispositif 100 selon l'invention dans un mode de réalisation préférentiel. De préférence, il s'agit d'un dispositif de pilotage de l'alimentation électrique qui trouve son application dans un dispositif lumineux, tel qu'un dispositif de signalisation, d'un véhicule automobile. De manière connue, un tel dispositif comprend un circuit d'alimentation 130 capable de convertir un courant continu d'une première intensité fourni par une source de courant interne au véhicule automobile, telle qu'une batterie, en un courant de charge d'une intensité différente. De tels moyens 130 présentent de manière connue une entrée dite « enable » qui permet de les activer ou désactiver respectivement à l'aide d'un signal de commande. Une pluralité de sources lumineuses 120, représentées de manière exemplaire par des diodes électroluminescentes, LEDs, est branchée en charge des moyens d'alimentation 130. Les sources lumineuses 120 se suivent dans le montage. La pluralité 120 est divisée en un premier groupe 122 et au moins un deuxième groupe 124. Pour clarifier la figure, un seul deuxième groupe 124 est illustré, sans pour autant limiter l'invention à cet exemple. Dans une application préférée du dispositif 100, le deuxième groupe de sources lumineuses 124 implémente la fonction lumineuse « feux de croisement » d'un dispositif de signalisation d'un véhicule automobile. Lorsque le premier et le deuxième groupe de sources lumineuses 122, 124 sont alimentés, la fonction lumineuse « feux de route », nécessitant une intensité lumineuse plus élevée, est implémentée. Des moyens d'interruption 140 permettent de basculer entre les deux (ou plusieurs) modes de fonctionnement en court-circuitant au moins un des groupes. Dans l'exemple montré, les moyens d'interruption 140 permettent de court-circuiter de manière sélective le premier groupe 122.

Finalement, le dispositif 100 comprend des moyens de commande 150 configurés pour commander d'une part les moyens d'alimentation 130 à l'aide d'un signal de commande 152, et d'autre part les moyens d'interruption 140 à l'aide d'un signal de commande 154.

Le fonctionnement des moyens de commande 150 est décrit par rapport au chronogramme de la figure 1. L'entrée des moyens de commande est illustrée par le signal 01. Ce signal représenté de façon binaire peut par exemple être issu d'un système informatique non-illustré interne au véhicule automobile. Il indique la volonté du conducteur d'allumer soit les LEDs 124 (« feux de croisement »), soit toutes les LEDs 122, 124 (« feux de route »). Lorsqu'un passage du mode « feux de route » vers le mode « feux de croisement » est demandé par le signal 01, les moyens de commande 150 désactivent dans un premier temps les moyens d'alimentation 130, de façon à ce qu'aucune des LEDs ne soit alimentée temporairement. Ceci est réalisé à l'aide du signal de commande binaire 152. Alors que les moyens d'alimentation 130 sont désactivés, les moyens d'interruption 140, initialement dans un état ouvert, sont basculés vers l'état fermé, court-circuitant ainsi le premier groupe de LEDs 122. Ceci est réalisé par le signal de commande binaire 154. Une fois le basculement réalisé, les moyens de commande 150 réactivent les moyens d'alimentation 130 à l'aide du signal 152. A la reprise de l'alimentation, les moyens 130 sont aptes à fournir un courant adapté à la charge qui vient d'être réduite par court-circuitage d'une partie des LEDs du montage en série. Ainsi, l'apparition d'un pic transitoire de courant important, potentiellement dangereux pour les LEDs 124 est évitée. Alors que des solutions connues dans l'art peuvent produire des pics transitoires d'environ 4,1 A, en utilisant les mesures de l'invention, ces pics ont été réduits à 2.2 A, ce qui représente un ordre de grandeur acceptable pour la plupart de LEDs disponibles. Evidemment, par la suite, le dispositif peut être rebasculé en mode « feux de route » pour revenir à son état initial.

Le signal de commande 154 des moyens d'interruption 130 est donc une image retardée du signal reçu 01. Dans des modes de réalisations typiques, le retard est de préférence de 50 à 100 µs tandis que d'autres valeurs peuvent être considérées par l'homme du métier. Afin que le basculement des moyen d'interruptions puisse se réaliser lorsque l'alimentation des LEDs est coupée, le signal 152 désactive de préférence les moyens d'alimentation 130 environ 50 ms avant que la commande de basculement ne soit émise. Le signal de désactivation 152 est en général donné immédiatement avec le flanc montant du signal 01. Les moyens 130 ne sont réactivés de préférence qu'après environ 100 µs, une fois que la commande de basculement a été émise. Evidemment les valeurs exactes de ces délais peuvent dévier selon les applications spécifiques, sans pour autant sortir du cadre de la présente invention.

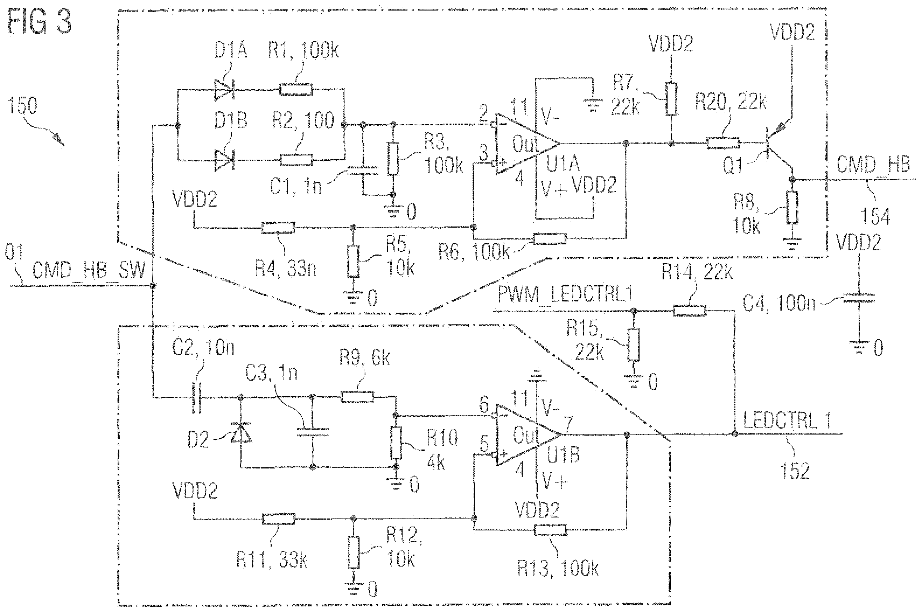

L'homme du métier saura implémenter cette fonctionnalité logique de plusieurs façons. La figure 3 montre par exemple un circuit électronique capable de réaliser les signaux de commande 152, 154 montrés sur le chronogramme de la figure 2, à partir du signal d'entrée 01.

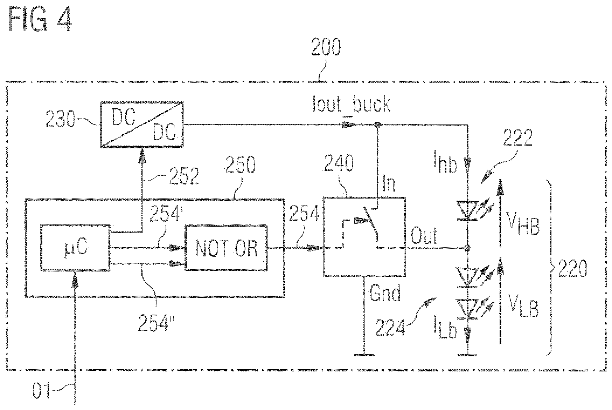

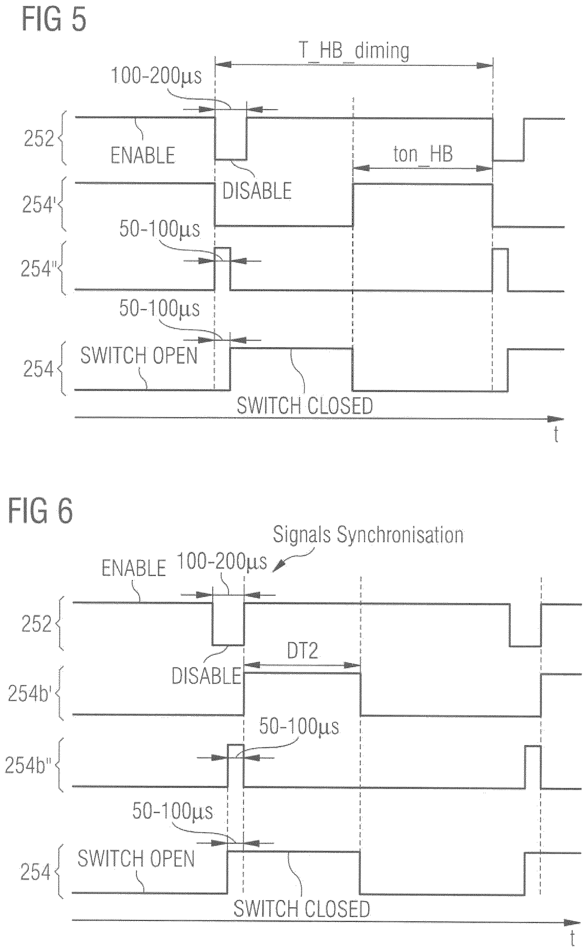

Le mode de réalisation 200 du dispositif illustré par la figure 4 est semblable à celui illustré par la figure 1. Cependant, les moyens de commandes 250 sont réalisés par un élément microcontrôleur qui permet de générer des signaux de commandes 252, 254', 254", et par un circuit électronique implémentant la fonction logique NON-OU (NOR). Le microcontrôleur est programmé de manière à réaliser les signaux 252, 254' et 254" tels que montrés sur le chronogramme de la figure 5. Le signal d'entrée 01 n'y est pas représenté. Les transitions d'états des trois signaux sont synchronisées par rapport au flanc montant du signal 01. Le microcontrôleur 250 désactive d'abord les moyens d'alimentation 230 en changeant l'état du signal binaire 252 sur « disable ». En même temps, un premier signal de commande 254', qui est une image du signal 01, est émis sur une sortie du microcontrôleur. Le signal 254" est émis sur une sortie différente du microcontrôleur et représente le retard à appliquer au flanc montant du signal d'interruption. Finalement, la porte logique NON-OU combine les deux signaux 254', 254" pour générer le signal 254, qui commande le basculement des moyens d'interruption 240 vers l'état fermé. Une fois la commande basculement générée, les moyens d'alimentation 230 sont réactivés par le signal 252 après un laps de temps prédéterminé.

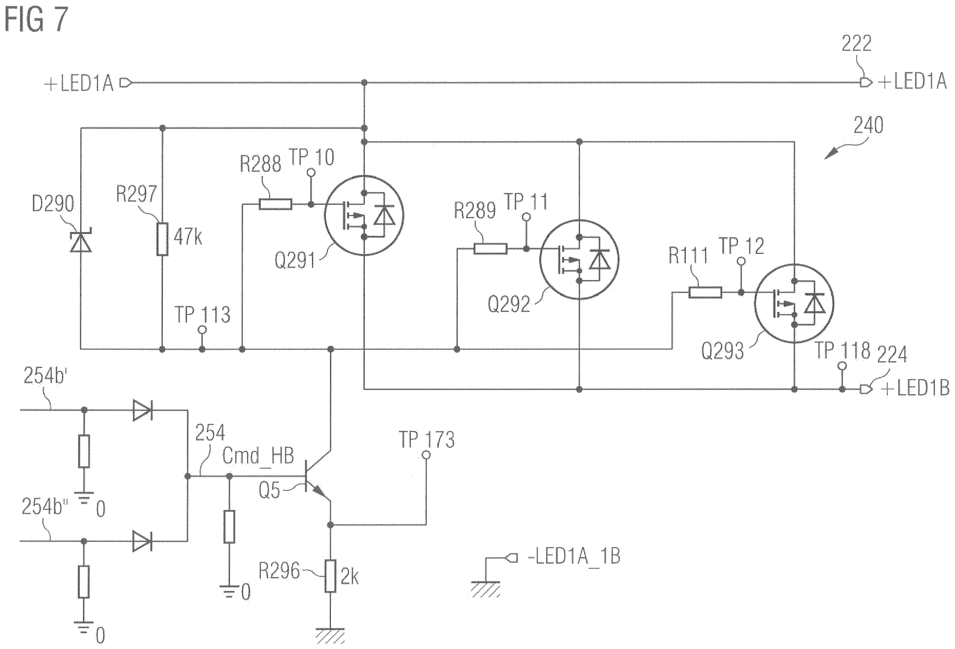

La figure 6 montre un exemple alternatif des signaux de commande générés par le microcontrôleur 250. Ici, les signaux 254b' et 254b" sont synchronisés par rapport au flanc montant du signal de contrôle 252 des moyens d'alimentation 230. Comme pour le mode de réalisation précédent, une porte logique, cette fois de type OU, permet de combiner les signaux 254b', 254b" afin de générer le signal de commande 254 des moyens d'interruption 240. Un exemple d'implémentation correspondant d'un circuit électronique pour réaliser la fonction OU et les moyens d'interruption 240, impliquant notamment des transistors, et illustré par la figure 7.

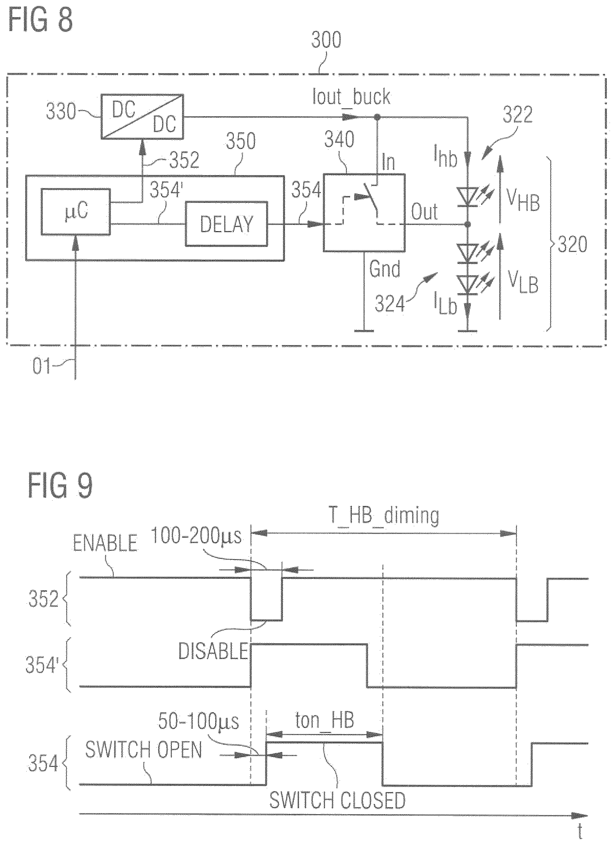

Le mode de réalisation 300 du dispositif illustré par la figure 8 est semblable aux modes de réalisation décrits au préalable. Cependant, les moyens de commandes 350 sont réalisés par un élément microcontrôleur programmé qui permet de générer des signaux de commandes 352, 354' et par un circuit électronique implémentant un retard.

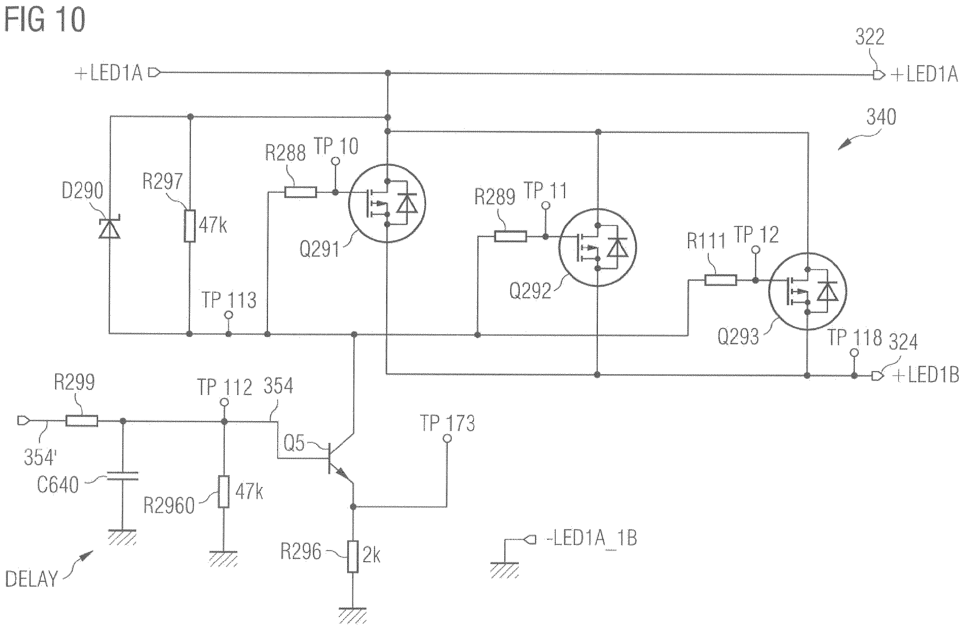

Le microcontrôleur est programmé de manière à réaliser les signaux 352 et 354' tels que montrés sur le chronogramme de la figure 9. Le signal d'entrée 01 n'y est pas représenté. Les transitions d'états des deux signaux sont synchronisées par rapport au flanc montant du signal 01. Le microcontrôleur 350 désactive d'abord les moyens d'alimentation 330 en changeant l'état du signal binaire 352 sur « disable ». En même temps, un signal de commande 354', qui est une image du signal 01, est émise sur une sortie du microcontrôleur. Le circuit électronique montré en bas de la figure 10 retarde le signal 354' pour obtenir le signal de commande 354 des moyens d'interruption 340.

## Revendications

1. Dispositif (100, 200, 300) de pilotage de l'alimentation électrique d'une pluralité de sources lumineuses (120, 220, 320) composée d'un premier groupe (122, 222, 322) comprenant au moins une source lumineuse, monté en série avec au moins un deuxième groupe (124, 224, 324) comprenant au moins une source lumineuse,
le dispositif comprenant un circuit d'alimentation (130, 230, 330) auquel la pluralité de sources lumineuses (120, 220, 320) est branchée en charge,
et des moyens d'interruption (140, 240, 340) qui permettent d'alimenter de manière sélective au moins un des premier ou deuxième groupes ou toute la pluralité de sources lumineuses,
dans lequel le dispositif comprend en outre des moyens de commande (150, 250, 350) qui permettent de commander l'état d'activation du circuit d'alimentation (130, 230, 330) et l'état des moyens d'interruption (140, 240, 340) lorsqu'une commutation de l'alimentation de toute la pluralité de sources lumineuses à l'alimentation de l'un ou de certains seulement des groupes de sources lumineuses est requise ; **caractérisé en ce que** les moyens de commande (150, 250, 350) sont configurés de façon à réaliser les étapes suivantes lorsqu'une commutation de l'alimentation de toute la pluralité de sources lumineuses à l'alimentation du deuxième groupe (124, 224, 324) de sources lumineuses est requise :
- réception d'un signal (01) indiquant la commutation requise, puis
- désactivation du circuit d'alimentation (130, 230, 330), puis
- commutation des moyens d'interruption (140, 240, 340), pendant que le circuit d'alimentation (130, 230, 330) est désactivé, de façon à court-circuiter le premier groupe de sources lumineuses (122, 222, 322);
- réactivation du circuit d'alimentation (130, 230, 330).

2. Dispositif selon la revendication 1, **caractérisé en ce que** le circuit d'alimentation (130, 230, 330) est désactivé pendant 100 à 200 microsecondes sur réception du signal (01) et **en ce que** la commutation des moyens d'interruption (140, 240, 340) est réalisée avec un délai par rapport à la réception du signal (01).

3. Dispositif selon la revendication 2, **caractérisé en ce que** le délai est de l'ordre de 50 à 100 microsecondes.

4. Dispositif selon une des revendications 1 à 3, **caractérisé en ce que** les moyens de commande (150, 250, 350) comprennent un circuit électronique qui réalise la fonction de délai de commutation.

5. Dispositif selon une des revendications 1 à 4, **caractérisé en ce que** les moyens de commande (150, 250, 350) comprennent un circuit électronique qui réalise la fonction de désactivation du circuit d'alimentation (130, 230, 330).

6. Dispositif selon une des revendications 1 à 5, **caractérisé en ce que** le premier et/ou le deuxième groupe comprend une pluralité de sources lumineuses branchées en série.

7. Dispositif selon une des revendications 1 à 6, **caractérisé en ce que** les sources lumineuses comprennent un composant semiconducteur, notamment une diode électroluminescente, LED.

8. Dispositif lumineux pour un véhicule automobile, le dispositif comprenant un dispositif de pilotage de l'alimentation électrique selon une des revendications 1 à 7

9. Dispositif selon la revendication 8, **caractérisé en ce que** le premier groupe (122, 222, 322) à lui seul implémente la fonction lumineuse « feux de croisement », et **en ce que** les premier et deuxième groupes ensemble implémentent la fonction lumineuse « feux de route ».

10. Procédé de pilotage de l'alimentation électrique d'une pluralité de sources lumineuses composée d'un premier groupe (122, 222, 322) comprenant au moins une source lumineuse, monté en série avec un deuxième groupe (124, 224, 324) comprenant au moins une source, comprenant les étapes suivantes :
- mise à disposition d'un circuit d'alimentation (130, 230, 330) auquel la pluralité de sources lumineuses est branchée en charge ;
- mise à disposition de moyens d'interruption (140, 240, 340) qui permettent d'alimenter de manière sélective le deuxième groupe (124, 224, 324) ou la pluralité de sources lumineuses ; dans lequel le procédé comprend en outre l'étape suivante :
- commander l'état d'activation du circuit d'alimentation (130, 230, 330) et l'état des moyens d'interruption (140, 240, 340) lorsqu'une commutation de l'alimentation de toute la pluralité de sources lumineuses à l'alimentation du deuxième groupe (124, 224, 324) de sources lumineuses est requise **caractérisé en ce qu'**il comprend les étapes suivantes :
- réception d'un signal (01) indiquant la commutation requise, puis
- désactivation du circuit d'alimentation (130, 230, 330), puis
- commutation des moyens d'interruption (140, 240, 340), pendant que le circuit d'alimentation (130, 230, 330) est désactivé, de façon à court-circuiter le premier groupe (122, 222, 322) de sources lumineuses ;
- réactivation du circuit d'alimentation (130, 230, 330).

## Patentansprüche

1. Vorrichtung (100, 200, 300) zur Steuerung der Stromversorgung einer Vielzahl von Lichtquellen (120, 220, 320), die aus einer wenigstens eine Lichtquelle umfassenden ersten Gruppe (122, 222, 322) besteht, die mit einer wenigstens eine Lichtquelle umfassenden zweiten Gruppe (124, 224, 324) in Reihe geschaltet ist,
wobei die Vorrichtung eine Speiseschaltung (130, 230, 330), an welche die Vielzahl von Lichtquellen (120, 220, 320) als Last angeschaltet ist,
und Unterbrechungsmittel (140, 240, 340), die es ermöglichen, selektiv die erste und/oder die zweite Gruppe oder die gesamte Vielzahl von Lichtquellen zu speisen, umfasst,
wobei die Vorrichtung außerdem Steuerungsmittel (150, 250, 350) umfasst, die es ermöglichen, den Aktivierungszustand der Speiseschaltung (130, 230, 330) und den Zustand der Unterbrechungsmittel (140, 240, 340) zu steuern, wenn eine Umschaltung von der Speisung der gesamten Vielzahl von Lichtquellen zur Speisung nur einer oder einiger der Gruppen von Lichtquellen erforderlich ist; **dadurch gekennzeichnet, dass** die Steuerungsmittel (150, 250, 350) derart ausgelegt sind, dass sie die folgenden Schritte ausführen, wenn eine Umschaltung von der Speisung der gesamten Vielzahl von Lichtquellen zur Speisung der zweiten Gruppe (124, 224, 324) von Lichtquellen erforderlich ist:
- Empfang eines Signals (01), das die erforderliche Umschaltung anzeigt, danach
- Deaktivierung der Speiseschaltung (130, 230, 330), danach
- Umschaltung der Unterbrechungsmittel (140, 240, 340), während die Speiseschaltung (130, 230, 330) deaktiviert ist, derart, dass die erste Gruppe von Lichtquellen (122, 222, 322) kurzgeschlossen wird;
- erneute Aktivierung der Speiseschaltung (130, 230, 330).

2. Vorrichtung nach Anspruch 1, **dadurch gekennzeichnet, dass** die Speiseschaltung (130, 230, 330) bei Empfang des Signals (01) für 100 bis 200 Mikrosekunden deaktiviert wird, und dadurch, dass die Umschaltung der Unterbrechungsmittel (140, 240, 340) mit einer Verzögerung in Bezug auf den Empfang des Signals (01) vorgenommen wird.

3. Vorrichtung nach Anspruch 2, **dadurch gekennzeichnet, dass** die Verzögerung im Bereich von 50 bis 100 Mikrosekunden liegt.

4. Vorrichtung nach einem der Ansprüche 1 bis 3, **dadurch gekennzeichnet, dass** die Steuerungsmittel (150, 250, 350) eine elektronische Schaltung umfassen, welche die Funktion der Umschaltverzögerung ausführt.

5. Vorrichtung nach einem der Ansprüche 1 bis 4, **dadurch gekennzeichnet, dass** die Steuerungsmittel (150, 250, 350) eine elektronische Schaltung umfassen, welche die Funktion der Deaktivierung der Speiseschaltung (130, 230, 330) ausführt.

6. Vorrichtung nach einem der Ansprüche 1 bis 5, **dadurch gekennzeichnet, dass** die erste und/oder die zweite Gruppe eine Vielzahl von in Reihe geschalteten Lichtquellen umfasst.

7. Vorrichtung nach einem der Ansprüche 1 bis 6, **dadurch gekennzeichnet, dass** die Lichtquellen eine Halbleiterkomponente umfassen, insbesondere eine Leuchtdiode, LED.

8. Leuchtvorrichtung für ein Kraftfahrzeug, wobei die Vorrichtung eine Vorrichtung zur Steuerung der Stromversorgung nach einem der Ansprüche 1 bis 7 umfasst.

9. Vorrichtung nach Anspruch 8, **dadurch gekennzeichnet, dass** die erste Gruppe (122, 222, 322) für sich allein die Lichtfunktion "Abblendlicht" implementiert, und dadurch, dass die erste und die zweite Gruppe zusammen die Lichtfunktion "Fernlicht" implementieren.

10. Verfahren zur Steuerung der Stromversorgung einer Vielzahl von Lichtquellen, die aus einer wenigstens eine Lichtquelle umfassenden ersten Gruppe (122, 222, 322) besteht, die mit einer wenigstens eine Quelle umfassenden zweiten Gruppe (124, 224, 324) in Reihe geschaltet ist, die folgenden Schritte umfassend:
- Bereitstellung einer Speiseschaltung (130, 230, 330), an welche die Vielzahl von Lichtquellen als Last angeschaltet ist;
- Bereitstellung von Unterbrechungsmitteln (140, 240, 340), die es ermöglichen, selektiv die zweite Gruppe (124, 224, 324) oder die Vielzahl von Lichtquellen zu speisen;
wobei das Verfahren außerdem den folgenden Schritt umfasst:
- Steuern des Aktivierungszustands der Speiseschaltung (130, 230, 330) und des Zustands der Unterbrechungsmittel (140, 240, 340), wenn eine Umschaltung von der Speisung der gesamten Vielzahl von Lichtquellen zur Speisung der zweiten Gruppe (124, 224, 324) von Lichtquellen erforderlich ist,
**dadurch gekennzeichnet, dass** es die folgenden Schritte umfasst:
- Empfang eines Signals (01), das die erforderliche Umschaltung anzeigt, danach
- Deaktivierung der Speiseschaltung (130, 230, 330), danach
- Umschaltung der Unterbrechungsmittel (140, 240, 340), während die Speiseschaltung (130, 230, 330) deaktiviert ist, derart, dass die erste Gruppe von Lichtquellen (122, 222, 322) kurzgeschlossen wird;
- erneute Aktivierung der Speiseschaltung (130, 230, 330).

## Claims

1. Device (100, 200, 300) for driving the supply of power to a plurality of light sources (120, 220, 320) that is made up of a first group (122, 222, 322) comprising at least one light source, which first group is connected in series with at least one second group (124, 224, 324) comprising at least one light source, the device comprising a supply circuit (130, 230, 330) to which the plurality of light sources (120, 220, 320) is connected as a load,
and switching means (140, 240, 340) that allow at least one of the first or second groups or the whole plurality of light sources to be powered selectively, wherein the device moreover comprises control means (150, 250, 350) that allow control of the activation state of the supply circuit (130, 230, 330) and the state of the switching means (140, 240, 340) when a changeover from powering the whole plurality of light sources to powering one or just some of the groups of light sources is required;
**characterized in that** the control means (150, 250, 350) are configured so as to perform the following steps when a changeover from powering the whole plurality of light sources to powering the second group (124, 224, 324) of light sources is required:
reception of a signal (01) indicating the required changeover, then
- deactivation of the supply circuit (130, 230, 330), then
- changeover of the switching means (140, 240, 340), while the supply circuit (130, 230, 330) is deactivated, so as to short the first group of light sources (122, 222, 322);
- reactivation of the supply circuit (130, 230, 330) .

2. Device according to Claim 1, **characterized in that** the supply circuit (130, 230, 330) is deactivated for 100 to 200 microseconds on reception of the signal (01), and **in that** the changeover of the switching means (140, 240, 340) is performed with a delay relative to the reception of the signal (01).

3. Device according to Claim 2, **characterized in that** the delay is of the order of 50 to 100 microseconds.

4. Device according to one of Claims 1 to 3, **characterized in that** the control means (150, 250, 350) comprise an electronic circuit that performs the changeover delay function.

5. Device according to one of Claims 1 to 4, **characterized in that** the control means (150, 250, 350) comprise an electronic circuit that performs the deactivation function for the supply circuit (130, 230, 330) .

6. Device according to one of Claims 1 to 5, **characterized in that** the first and/or second group comprises a plurality of light sources connected in series.

7. Device according to one of Claims 1 to 6, **characterized in that** the light sources comprise a semiconductor component, particularly a light emitting diode, LED.

8. Lighting device for an automotive vehicle, the device comprising a device for driving the power supply according to one of Claims 1 to 7.

9. Device according to Claim 8, **characterized in that** the first group (122, 222, 322) alone implements the "low beam" lighting function, and **in that** the first and second groups together implement the "high beam" lighting function.

10. Method for driving the supply of power to a plurality of light sources that is made up of a first group (122, 222, 322) comprising at least one light source, which first group is connected in series with a second group (124, 224, 324) comprising at least one source, comprising the following steps:
- provision of a supply circuit (130, 230, 330) to which the plurality of light sources is connected as a load;
- provision of switching means (140, 240, 340) that allow the second group (124, 224, 334) or the plurality of light sources to be powered selectively;
wherein the method moreover comprises the following
step:
- controlling the activation state of the supply circuit (130, 230, 330) and the state of the switching means (140, 240, 340) when a changeover from powering the whole plurality of light sources to powering the second group (124, 224, 324) of light sources is required
**characterized in that** it comprises the following
steps:
- reception of a signal (01) indicating the required changeover, then
- deactivation of the supply circuit (130, 230, 330), then
- changeover of the switching means (140, 240, 340), while the supply circuit (130, 230, 330) is deactivated, so as to short the first group (122, 222, 322) of light sources;
- reactivation of the supply circuit (130, 230, 330) .
